# EUROPÄISCHE PATENTSCHRIFT

(11) **EP 1 366 968 B1**
(45) Veröffentlichungstag und Bekanntmachung des Hinweises auf die Patenterteilung: **27.04.2005**
(21) Anmeldenummer: 03009422.1
(22) Anmeldetag: 25.04.2003
(51) Int. Cl.: B62B 7/08

(54) **Zusammenklappbarer Schiebewagen für Kinder und/oder Puppen**
Collapsible stroller for children and/or dolls
Voiture d'enfant pliable et/ou voiture de poupée pliable

(30) Priorität: 29.05.2002 DE 20208353 U
(43) Veröffentlichungstag der Anmeldung: 03.12.2003
(73) Patentinhaber: Beger, Udo, 84030 Ergolding (DE)
(72) Erfinder: Beger, Udo, 84030 Ergolding (DE)
(74) Vertreter: Eichstädt, Alfred, Dipl.-Ing.

(56) Entgegenhaltungen:
- FR-A- 2 310 910
- US-A- 3 836 164
- US-A- 3 881 739
- US-A- 5 536 033
- US-A- 5 558 357

## Beschreibung

Die Erfindung betrifft einen zusammenklappbaren Schiebewagen für Kinder und/oder Puppen mit einem Wagengestell, das sich aus einer Gebrauchsstellung in eine Verstaustellung zusammenklappen lässt.

Ein zusammenklappbarer Schiebewagen für Kinder und/oder Puppen mit einem gattungsgemäß ausgebildeten Wagengestell ist aus der DE 201 12 118 Ul bekannt. Bei dem darin angegebenen Schiebewagen werden hintere Stützstreben, an deren Enden sich hintere Räder befinden, nach vorne in Richtung vorderseitiger Holme verschwenkt. Für die Betätigung ist ein Mitnahmerahmen vorgesehen, der an den vorderen Holmen schwenkbeweglich befestigt ist und über Aufnahmestangen an den hinteren Stützstreben befestigt ist, die beim Anheben des Mitnahmerahmens ein Verschwenken der Stützstreben in eine vordere Verstauposition und umgekehrt ein Aufstellen des Gestells beim Niederdrücken bewirken.

Aus der US 3,881,739 A ist ein Kinderwagen, insbesondere Sportwagen, gemäß dem Oberbegriff des Anspruchs 1 bekannt, bei welchem ein Sitz aus weichem Material auf einer zusammenlegbaren Rahmenkonstruktion angeordnet ist. Die Rahmenkonstruktion weist ein unteres, scherenartig an einem Gelenkstück angelenktes Paar von Seitenholmen auf, die durch zusammenklappbare Querholme miteinander verbunden sind, wobei an dem Gelenkstück und an den Enden der Seitenholme je ein Rad angebracht ist. Auf den Seitenholmen sind verschiebbare Gelenke für die schwenkbewegliche Befestigung von Rückenholmen vorgesehen, an deren freien Enden je ein Schiebegriff angebracht ist. Um die Konstruktion in der aufgestellten Lage zu stabilisieren und zu halten, sind vorzugsweise zwischen den beiden Rückenholmen obere und untere Querholme vorgesehen, die aus jeweils zwei gleichen, an einem Ende gelenkig miteinander verbundenen Stangen bestehen und mit ihren anderen Enden an den Rückenholmen angelenkt sind. An den Rückenholmen sind vorderseitig Sitzholme angelenkt, die schwenkbeweglich mit ihren vorderen Enden an Lagern der Seitenholme befestigt sind. Rückseitig an den Rückenholmen sind Beinstützen vorgesehen, die mit ihren anderen Enden an den Querholmen drehgelenkig befestigt sind. Durch die verschiebliche Anordnung der Gelenke an den Rückenholmen einerseits und durch die zusammenlegbaren Querholme andererseits kann das Wagengestell bei gleichzeitigem Verschieben der Gelenke für die Rückenholme auf den Seitenholmen vollständig zusammengelegt werden.

Aus der US 5,536,033 A ist ebenfalls ein dreirädriges Kinderwagengestell bekannt, bei dem obere, V-förmig zueinander verlaufende Holme an unteren, die Gabel für das Rad bildende Holme angelenkt sind, deren obere Enden in Schwenklagerhaltern enden, die an abnehmbaren Stützbeinen befestigbar sind, die schwenkbeweglich auf der Achse der hinteren Räder angeordnet sind. Durch Lösen der oberen Verbindung der Stützen können die oberen Holme nach unten verschwenkt und das Gestell zusammengelegt werden.

Aus der FR 2 310 910 A sind ein zusammenlegbares Kinderwagengestell und ein zusammenlegbarer Schaukelstuhl bekannt, die einen gleichen Grundaufbau aufweisen, wie das Kinderwagengestell gemäß der US 3,881,739 A, wobei jedoch die Rückenholme an festen Lagern an den Seitenholmen schwenkbeweglich gelagert sind und die Rückenholme unterhalb eines zusammenlegbaren Scherengestänges, das als Spreizgestänge zwischen den Rückenholmen vorgesehen ist, geteilt und gegeneinander verschwenkbar ausgeführt sind, so dass sie zusammen mit den Sitzholmen ein Kräfteparallelogramm bilden. Für die Spreizung der Seitenholme ist zusätzlich ein zusammenlegbarer Querholm zwischen den unteren Abschnitten der Rückenholme vorgesehen.

Der Erfindung liegt die Aufgabe zugrunde, ein Wagengestell der gattungsgemäßen Art für zusammenklappbare Schiebewagen für Kinder und/oder Puppen zu vereinfachen, den Mechanismus für die Zusammenlegung zu vereinfachen und so auszubilden, dass eine leichtere Handhabung beim Aufstellen und Zusammenklappen gegeben ist. Gelöst wird die Aufgabe durch Ausgestaltung eines zusammenklappbaren Schiebewagens für Kinder und/oder Puppen gemäß der im Anspruch 1 angegebenen Lehre.

Ein Wagengestell, das erfindungsgemäß ausgebildet ist, ist ähnlich aufgebaut wie ein Schirmgestänge. Es besteht nämlich aus vier Holmen, die aus einer zusammengeklappten Position in eine aufgestellte Position verschwenkbar sind, und zwar relativ zueinander. Es ist aber auch möglich, dass die unteren Holme nicht verschwenkbar angeordnet sind, sondern dass nur die oberen Holme gegenüber den unteren relativ verschwenkbar sind, und zwar in der Weise, dass sie in der zusammengeklappten Position, in der sie nahezu parallel zu den unteren Holmen verlaufen, in eine Schrägposition verbracht werden, in der das Wagengestell aufgestellt ist. Zur Lagesicherung ist ein Spreizgestänge vorgesehen, dass beabstandet zu den Schwenkgelenken im Verbindungsteil angeordnet ist und auf die Holme wirkt. Es versteht sich dabei von selbst, dass, desto weiter die Anlenkung nach hinten verlegt ist, die Stützstreben eine größere Verdrehsicherheit und Stabilität des Wagengestells sicherstellen. Um die Schwenkbewegung der Holme ausführen zu können, können die Stützstreben einzeln an einem Holm angelenkt und an dem anderen korrespondierenden Holm im aufgestellten Zustand befestigt sein. Es ist aber auch möglich, an einem Holm ein verschiebliches Schwenklager vorzusehen, das zum Aufstellen des Gestells nach hinten oder nach vorne verschoben wird und zum Zusammenfalten des Gestells in die entgegengesetzte Richtung, wobei eine Bewegungsmitkopplung zu den anderen Holmen über die Verbindungsstreben gegeben ist, so dass die oberen Holme in Richtung der unteren Holme verschwenken.

Im Falle der Verwendung von äußeren Verbindungsstreben ist es dabei erforderlich, dass die Spreizung auch zwischen den Holmen einer Ebene (oben, unten bzw. rechts, links) sichergestellt ist. Diese Streben können auch als Schwenkstreben vorgesehen sein, die mit ihren anderen Enden dann an Haltern der korrespondierenden Holme zu befestigen sind.

Besonders vorteilhaft ist ein Spreizgestänge in Form eines Kreuzgestänges, z. B. in X-Form, wenn dieses aus geteilten Stützstreben besteht, die schwenkbeweglich an Schwenkhaltern an den Holmen einerseits und an einem Lagerhalter, der zentrisch vorgesehen ist, andererseits angelenkt sind, so dass - wie beim Regenschirm - die Streben durch Bewegen des Lagerhalters in Längsrichtung zum einen aufgestellt und zum anderen zusammengefaltet werden. In der aufgestellten Position können dabei die schwenkbar gelagerten Enden in Führungsaufnahmen eingreifen und hierin seitlich gesichert werden.

Um an einem solchen Kinderwagengestell einen Kinderwagenaufsatz, z. B. einen Kraftfahrzeugkindersicherheitssitz, befestigen zu können, sind an den oberen Holmen entsprechende Aufnahmen vorzusehen. Solche können zusätzlich auch an den oberen Stützstreben vorgesehen sein.

Vorteilhafte Ausgestaltungsformen der Erfindung sind im einzelnen in den Unteransprüchen selbsterklärend angegeben.

Die Erfindung wird nachfolgend anhand eines in den Figurren dargestellten Ausführungsbeispiels ergänzend erläutert.

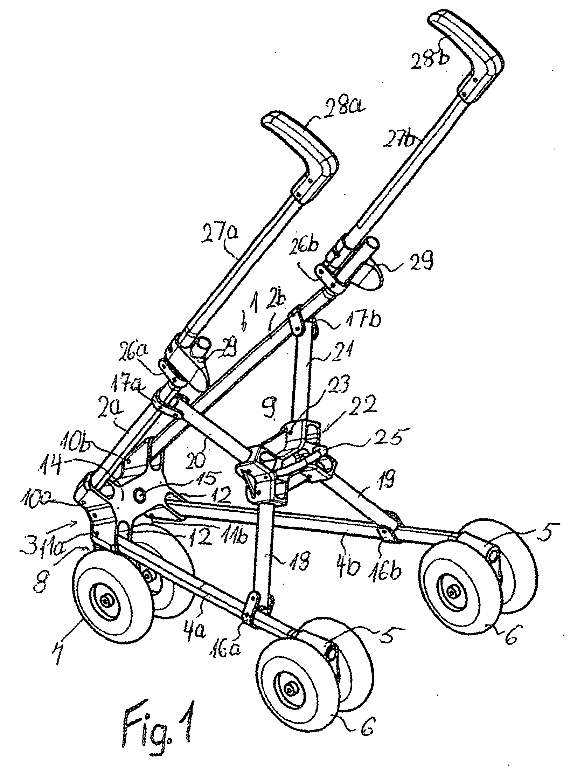

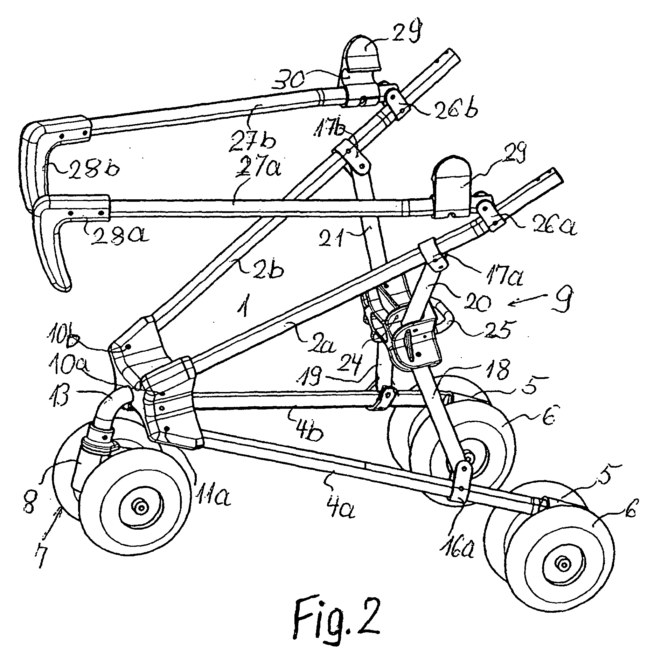

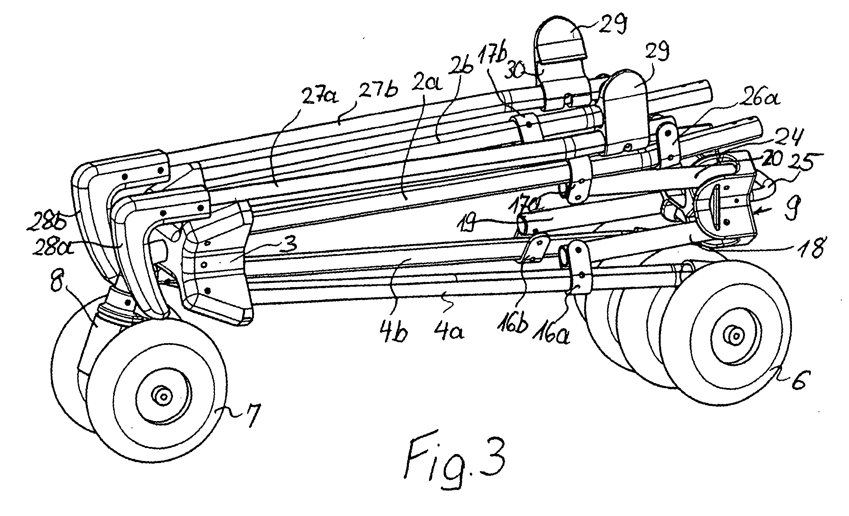

In den Figuren 1 und 2 ist ein zusammenklappbarer Schiebewagen mit einem erfindungsgemäß ausgebildeten Wagengestell in perspektivischer Darstellung gezeichnet, und zwar in Figur 1 in der Rückansicht und in Figur 2 in der Seitenvorderansicht. In Figur 3 ist derselbe Wagen in einem zusammengeklappten Zustand dargestellt, um platzsparend, z. B. in einem Kofferraum eines Fahrzeugs, verstaut werden zu können.

Das Wagengestell 1 des Kinderwagens besteht - wie aus den Figuren ersichtlich ist - im wesentlichen aus zwei unteren Holmen 2a und 2b, die aus der Kinderwagentechnik bekannte Rohre und oberflächenbehandelt bzw. -beschichtet sind. Diese beiden Holme sind vorderseitig in einem Verbindungsteil 3 gelagert, das V-förmige Lagerkammern 12 aufweist, in die Rohrenden eingesetzt sind und durch quer verlaufende Schwenkachsen 11a und 11b gesichert sind. Die Öffnungsweite der V-förmigen Lagerkammer 12 begrenzt zum einen den Schwenkweg, zum anderen bietet sie einen seitlichen Halt für die Holme 2a, 2b. Bei einer anderen Ausführung können die beiden unteren Holme 4a, 4b auch starr an dem Verbindungsteil befestigt sein. In diesem Fall wären nur die oberen Holme 2a und 2b verschwenkbar. Die oberen Holme 2a, 2b sind ebenfalls in Lagerkammern 12 in dem Verbindungsteil 3 gelagert und lassen sich um einen definierten Winkel nach oben verschwenken, so dass die in den Figuren 1 und 2 dargestellte Aufstellposition einnehmbar ist. Die beiden oberen Holme 2a und 2b sind um Schwenklager 10a und 10b innerhalb der Lagerkammern 12 verschwenkbar gelagert. Die Lagerkammern 12 sind - bezogen auf die Längsachse des Kinderwagengestells - so angeordnet, dass sie ein X bilden und sind mittels eines größeren Zwischenblockes im Verbindungsteil 3 auf Abstand gehalten, dessen Dimensionierung die Beabstandung der Holme 2a, 2b und 4a, 4b im zusammengeklappten Zustand des Wagengestells bestimmt, wie aus Figur 3 zu ersehen ist. Zentrisch im Verbindungsteil 3 ist in Längsrichtung eine Lageröffnung 15 vorgesehen, in die - wie aus Figur 2 ersichtlich - ein Krümmer einer Vorrichtung 13 eingesteckt ist, an dem ein Radlagerhalter 8 für Vorderräder 7 befestigt ist. Diese lassen sich mit dem Radlagerhalter 8 um den etwa senkrecht nach unten stehenden Teil der Vorrichtung 13 verdrehen, so dass eine Lenkung des Schiebewagens hierüber möglich ist. Diese Anordnung ist bei Kinderwägen, insbesondere bei Buggywägen, hinlänglich bekannt. Der Radlagerhalter 8 verfügt darüber hinaus auch über Feststellmöglichkeiten, um einen Geradeauslauf der Radpaare aus den Rädern 7 zu ermöglichen. Es ist aus beiden Darstellungen ersichtlich, dass die oberen Holme 2a und 2b eine gespreizte V-Form im aufgestellten Zustand einnehmen, ebenso aber auch die unteren beiden Holme 4a und 4b. Eine V-Form wird auch in vertikaler Richtung erreicht, so dass zwischen die beiden oberen Holmen im Wagengestell 1 ein Kinderwageneinsatz eingesetzt werden kann. Zu diesem Zweck sind Halterungen vorgesehen, die nicht dargestellt sind, um das Kinderwagengestell entsprechend fixieren zu können. Zum Zwecke der Aufstellung des Gestells einerseits und zum Zwecke der Lagersicherung im aufgestellten Zustand andererseits ist ein Spreizgestänge, bestehend aus den Stützstreben 18, 19, 20, 21, vorgesehen, die in Lagerkammern 24 eines Lagerhalters 9 schwenkbar und mit den anderen Enden verschwenkbar an Schwenklagerhaltern 16a, 16b und 17a, 17b, die an den Holmen befestigt sind, gelagert sind. Die Öffnungen der Führungsaufnahmen sind in Richtung des Verbindungsteils 3 gerichtet. Die Stützstreben 18, 19, 20, 21 liegen an den radial sich erstreckenden Rückseiten der Führungsaufnahmen im aufgestellten Zustand an. Es ist ersichtlich, dass durch Ausübung einer Zugkraft über den Bügel 25 auf den Lagerhalter 9 nach hinten die Stützstreben 18, 19, 20, 21 automatisch verschwenken. Durch weiteres Ziehen nach hinten nehmen dabei die Holme die aus Figur 3 ersichtlich Position ein. Das Wagengestell ist damit in eine zweite Gebrauchsstellung, nämlich die Verstaustellung, auf einfachste Weise verbringbar. Umgekehrt ist es zum Aufstellen nur erforderlich, eine Druckkraft auf den Lagerhalter 9 von hinten auszuüben, um so das Gestell wieder aufzustellen. Die Arretierung in der aufgestellten Position übernehmen nichtdargestellte, in die Aufnahme hineinreichende Noppen oder hineinsteckbare Sicherungselemente. An den die Schwenklagerhaltern 17, 17b überstehenden Enden der Holme 2a, 2b sind weitere Schwenklager 26a und 26b für zwei Schiebestangen 27a und 27b vorgesehen, die aus der in Figur 2 dargestellten Position in die in Figur 1 aufgestellte Position nach oben verschwenkbar sind. Elastische Flächenüberrastelemente 29 rasten dabei mit einer Lagerschale 30 auf das Holmende auf. Diese Rastsicherungselemente können entweder an dem Ende des Holmes 2a, 2b oder an der Schiebestange 27a, 27b befestigt sein, wie dies dargestellt ist. An den hinteren Enden der Holme 4a, 4b sind im übrigen Radlagerhalter 5 mit einer Radanordnung 6 jeweils aus zwei Rädern bestehend, befestigt. An dem oberen Ende der Schiebestangen 27a, 27b sind Handgriffe 28a und 28b vorgesehen, mit denen das Gestell auf einfache Weise geschoben werden kann. Aus Figur 3 ist die zusammengelegte Gebrauchsfunktion ersichtlich. Dabei sind auch die Schiebebügel nach vorne verschwenkt und enden mit ihren Griffen 28a und 28b unmittelbar vor dem Verbindungsteil 3.

## Patentansprüche

1. Zusammenklappbarer Schiebewagen für Kinder und/oder Puppen mit einem Wagengestell (1), das mindestens aufweist:
- zwei obere, spiegelbildlich angeordnete, von vorn nach hinten ansteigend und im wesentlichen V-förmig verlaufende, durchgehende oder aus miteinander verbundenen Abschnitten gebildete Gestellholme (2a, 2b), deren untere Enden zum Verbringen aus einer zusammengelegten Stellung in eine Aufstellposition schwenkbar an einem Verbindungsteil (3) angekoppelt sind,
- an welchem Verbindungsteil (3) zwei untere, spiegelbildlich angeordnete, von vorn nach hinten im wesentlichen V-förmig verlaufende, durchgehende oder aus miteinander verbundenen Abschnitten gebildete verschwenkbare Gestellholme (4a, 4b) angeordnet sind, an deren hinteren Enden Radlagerhalter (5) für hintere Räder oder Räderanordnungen (6) befestigt sind,
- mindestens eine vordere Radanordnung (7) mit mindestens einem Rad, die mittels mindestens eines Radlagerhalters (8) an dem Verbindungsteil (3) oder einem Brückenteil der unteren Gestellholme (4a, 4b) befestigt ist,
gekennzeichned durch:
- ein aufstellbares Spreizgestänge (9) in Form eines Kreuzgestänges, das in einem bestimmten Abstand zum Verbindungsteil (3) an den Holmen (2a, 2b; 4a, 4b) und diese verbindend vorgesehen und derart ausgebildet ist, dass nach dem Aufstellen des Wagengestells die oberen und die unteren Holme (2a, 2b) in die charakteristische V-Position sowohl zueinander als auch gegeneinander verbracht sind und beim Zusammenlegen des Spreizgestänges (9) die oberen und unteren Holme (4a, 4b) gleichzeitig aufeinander zu verschwenken.

2. Schiebewagen nach Anspruch 1, **dadurch gekennzeichnet, dass** mindestens die Schwenkachsen (10a, 10b) der oberen Holme (2a, 2b) an dem Verbindungsteil (3) in einem solchen dreidimensionalen Neigungswinkel zur Längsachse des Wagengestells (1) angeordnet sind, dass im zusammengeklappten Zustand mindestens die oberen Holme (2a, 2b) nahezu parallel zueinander und gegenüber den unteren Holmen (4a, 4b) und in einem geringen Abstand verlaufen.

3. Schiebewagen nach Anspruch 1 oder 2, **dadurch gekennzeichnet, dass** die Schwenkachsen (11a) der unteren Holme (4a, 4b) zueinander und gegenüber den oberen Holmen (2a, 2b) an dem Verbindungsteil (3) in einen solchen dreidimensionalen Neigungswinkel zur Längsachse des Wagengestells (1) angeordnet sind, dass im zusammengeklappten Zustand die unteren Holme (4a, 4b) in etwa parallel in einem geringen Abstand verlaufen.

4. Schiebewagen nach einem der vorhergehenden Ansprüche, **dadurch gekennzeichnet, dass** das Verbindungsteil (3) V-förmige Lagerkämmern (12) zur Lagerung der Enden der Holme (2a, 2b; 4a, 4b) und zur Begrenzung des Verschwenkweges und zur seitlichen Stabilisierung aufweist, die zueinander in Form eines X angeordnet sind, und dass das Verbindungsteil (3) eine bestimmte Tiefe aufweist, die die Tiefe der V-förmigen Lagerkammern (12) im wesentlichen bestimmt, und dass an dem Verbindungsteil (3) Vorrichtungen (13) für die Befestigung des Radlagerhalters (8) vorgesehen sind.

5. Schiebewagen nach Anspruch 4, **dadurch gekennzeichnet, dass** das Verbindungsteil (3) aus Kunststoff hergestellt ist und die seitlichen Lagerkammern (12) über einen Mittenabstandsblock (14) voneinander getrennt sind, dessen Breite und Höhe die Abstände der Holme (2a, 2b; 4a, 4b) zueinander im zusammengeklappten Zustand bestimmen und dass an dem Mittenabstandsblock (14) eine zentrische Lageröffnung (15) mindestens vorderseitig vorgesehen ist, in die ein Lagerzapfen der Vorrichtung (13) für einen nach unten vorstehenden Radlagerhalter (8) einsetzbar ist.

6. Schiebewagen nach einem der vorhergehenden Ansprüche, **dadurch gekennzeichnet, dass** mindestens an den unteren (4a, 4b) oder an den oberen Holmen (2a, 2b), beabstandet zum vorderen Verbindungsteil (3), Schwenklagerhalter (16a, 16b; 17a, 17b) für Stützstreben (18, 19, 20, 21) des Spreizgestänges (9) vorgesehen sind, die über die Schwenklagerhalter (16a, 16b; 17a, 17b) an den korrespondierenden unteren oder oberen Holmen (2a, 2b; 4a, 4b) im aufgestellten Zustand des Wagengestells (1) fixierbar sind.

7. Schiebewagen nach einem der Ansprüche 1 bis 5, **dadurch gekennzeichnet, dass** sowohl an den oberen als auch an den unteren Holmen (2a, 2b; 4a, 4b) Schwenklagerhalter (16a, 16b; 17a, 17b) für Stützstreben (18, 19, 20, 21) des Spreizgestänges (9) vorgesehen sind, an denen die Stützstreben (18, 19, 29, 21) schwenkbeweglich gelagert sind, und dass mindestens ein Schwenklagerhalterpaar (18, 19; 20, 21) an den unteren oder oberen Holmen (2a, 2b; 4a, 4b) längsverschieblich und in der Aufstellposition des Spreizgestänges (9) arretierbar angeordnet ist, wobei durch Verschieben der Schwenklagerhalter das Gestell zusammengeklappt oder in die aufgestellte Gebrauchsposition verbringbar ist.

8. Schiebewagen nach Anspruch 6 oder 7, **dadurch gekennzeichnet, dass** die Schwenklagerhalter (16a, 16b; 17a, 17b) mindestens um einen bestimmten Winkel radial drehoder verschwenkbar auf oder an den Holmen angeordnet sind.

9. Schiebewagen nach Anspruch 8, **dadurch gekennzeichnet, dass** die Schwenklagerhalter (16a, 16b; 17a, 17b) in einer derartigen Anzahl und Positionierung angebracht sind, dass äußere umlaufende Verbindungsstreben im aufgestellten Zustand des Wagengestells (1) im wesentlichen ein Quadrat oder Rechteck bilden.

10. Schiebewagen nach einem der Ansprüche 6 bis 9, **dadurch gekennzeichnet, dass** zusätzlich zu äußeren Verbindungsstreben oder anstatt solcher Stützstreben (18, 19; 20, 21) kreuzend oder in X-Form angeordnet vorgesehen sind, die den rechten unteren Holm (4b) mit dem linken oberen Holm (2a) und den linken unteren Holm (4a) mit dem rechten oberen Holm (2b) im aufgestellten Zustand des Wagengestells (1) verbinden.

11. Schiebewagen nach Anspruch 10, **dadurch gekennzeichnet, dass** die kreuzweise oder in X-Form angeordnet vorgesehenen Stützstreben (18, 19; 20, 21) an einem mittigen Lagerhalter (22) mit Schwenklagern (23) angeordnet sind, die in Führungsaufnahmen (24) quer verlaufend vorgesehen sind, in denen die Stützstrebenenden (18, 19, 20, 21) seitlich geführt sind und die den Schwenkweg der Stützstreben (18, 19, 20, 21) begrenzen und hierin durch Arretierungsmittel wieder lösbar im aufgestellten Zustand fixiert sind, wobei der Lagerhalter (22) so angeordnet ist, dass er durch rückseitiges Wegziehen oder durch nach vorne gerichtetes Schieben bei umgekehrter Ausbildung der Führungsaufnahmen (24) das Kreuzspreizgestänge zusammenklappt, wobei gleichzeitig die Holme (2a, 2b; 4a, 4b) sich aufeinander zu bewegen.

12. Schiebewagen nach Anspruch 11, **dadurch gekennzeichnet, dass** der Lagerhalter (22) ein Kunststoffteil ist, in dem Führungsaufnahmen (24) vorgesehen sind, die im Neigungswinkel der Lagerkammern (12) im Verbindungsteil (3) und deren Öffnung zur Seite des Verbindungsteils (3) hin verlaufen.

13. Schiebewagen nach. Anspruch 11, **dadurch gekennzeichnet, dass** die Arretierungsmittel in der Führungsaufnahme (24) aus vorstehenden Noppen bestehen, die die Stützstreben in der Aufstellposition elastisch übergreifen.

14. Schiebewagen nach einem der Ansprüche 11 bis 13, **dadurch gekennzeichnet, dass** der Lagerhalter (22) aus Kunststoff besteht und Öffnungen zur Einbringung von Zusatzeinrichtungen für den Kinder- oder Puppenwagen, wie Hängevorrichtungen, beispielsweise für einen Einkaufskorb, und/oder einen Handgriff (25) für die Betätigung beim Aufstellen oder Zusammenlegen des Gestells (1) aufweist.

15. Schiebewagen nach Anspruch 1 oder 6, **dadurch gekennzeichnet, dass** an den die oberen Schwenklager (17a, 17b) überstehenden Enden der oberen Holme (2a, 2b) Schwenklagerhalter (26a, 26b) für umklappbare Schiebestangen (27a, 27b) mit Schiebegriff (28a, 28b) vorgesehen sind, deren Länge so gewählt ist, dass sie im Bereich des Verbindungsteils (3) im umgeklappten Zustand enden oder diesen vorderseitig überstehen, und dass an dem die Schwenklagerhalter (26a, 26b) überstehenden Holmenden oder an den Schiebestangen Rastfixiermittel vorgesehen sind, die eine lösbare Verbindung der Schiebestangen mit den oberen Holmen (2a, 2b) im aufgestellten Zustand des Wagengestells gewährleisten.

16. Schiebewagen nach Anspruch 15, **dadurch gekennzeichnet, dass** die Rastfixiermittel aus Kunststoffmaterial mit elastischen Lippen bestehen, und dass der Grundkörper der Rastfixiermittel durch Ausübung einer Seitenkraft verschwenkbar sind und seitlich über das Holmende oder den Schubstangenansatz rasten und eine Lagerungsöffnung zur Aufnahme des entsprechenden Teils aufweisen und verdrehsicher am anderen Teil befestigt sind.

17. Schiebewagen nach einem der vorhergehenden Ansprüche, **dadurch gekennzeichnet, dass** alle Holme, Verbindungsstreben und Stützstreben aus Metallrohr, vorzugsweise rundem Metallrohr, bestehen.

18. Schiebewagen nach Anspruch 1 oder einem oder mehreren der vorhergehenden Ansprüche, **dadurch gekennzeichnet, dass** an den oberen Holmen (2a, 2b) Halter für die Aufnahme eines Sitz- und/oder Liegewageneinsatzes, der zwischen den oberen Gestellholmen (2a, 2b) und/oder den Verbindungsstreben (20, 21) mindestens teilweise sich erstreckt, vorgesehen sind.

19. Schiebewagen nach Anspruch 18, **dadurch gekennzeichnet, dass** der Sitzeinsatz ein Autokindersicherheitssitz ist, der Gegenverbindungseinrichtungen zum Befestigen an den Haltern aufweist.

## Claims

1. Collapsible stroller for children and/or dolls with a frame (1) comprising at least:
- two upper, laterally reversed bars (2a, 2b) ascending from the front to the back and substantially V-shaped, continuous and formed by interconnected sections , the lower ends of said bars being pivotally attached to a connecting element (3) in order to be brought from a collapsed position into a mounted position,
- said connecting element (3) comprising two lower, laterally reversed bars (4a, 4b) ascending from the front to the back and substantially V-shaped, continuous and formed by interconnected sections, the lower ends of said bars containing at their rear ends wheel bearings (5) for rear wheels or arrangements of wheels (6),
- at least one front arrangement of wheels (7) with at least one wheel, said arrangement being attached by means of at least one wheel bearing (8) to the connecting element (3) or a bridge element of the lower bars (4a, 4b),
**characterized by**:
- a mountable spreader bar (9) in form of a crossbar arranged in a definite distance from the connecting element (3) at the bars (2a, 2b; 4a, 4b) connecting said bars and such designed that after mounting of the frame the upper and lower bars (2a, 2b) are brought into the characteristic V-position as well to each other as also against each other, and when folding the spreader bar the upper and lower bars (4a, 4b) swivel simultaneously to each other.

2. Stroller according to claim 1, **characterized in that** at least the axes of rotation (10a, 10b) of the upper bars (2a, 2b) at the connecting element (3) are located in such three-dimensional inclination angle to the longitudinal axis of the frame, that in the fold position at least the upper bars (2a, 2b) almost run parallel to each other and opposite to the upper bards (4a, 4b) in a small distance.

3. Stroller according to claim 1 or 2, **characterized in that** the axes of rotation (11a) of the lower bars (4a, 4b) are placed to each other and opposite to the upper bars (2a, 2b) at the connecting element (3) in such three-dimensional inclination angle that in folded position the lower bars (4a, 4b) approximately run parallel in a small distance.

4. Stroller according to one of the preceding claims, **characterized in that** the connecting element (3) comprises V-shaped bearing compartments (12) to support the ends of the bars (2a, 2b; 4a, 4b) and to limit the path of swiveling and for the lateral stabilization, said compartments being arranged to each other in a X-shaped form, and that the connecting element (3) has a definite depth substantially defining the depth of the V-shaped bearing compartment (12), and that the connecting element (3) comprises means (13) for fastening the wheel bearing (8).

5. Stroller according to claim 4, **characterized in that** the connecting element (3) is made of plastic and that the lateral bearing compartments (12) are separate from each other via a center distance block (14), the width and height of said block being defined by the distances of the bars (2a, 2b; 4a, 4b) from each other in the collapsed position, and that at said block (14) a centric opening (15) is provided at least in the front, in which opening a journal of the means 3) for a wheel bearing (8) is insertable.

6. Stroller according to one of the preceding claims, **characterized in that** the at least at the lower bars (4a, 4b) or at the upper bars (2a, 2b), in distance from the front connecting element (3), pivot bearing supports (16a, 16b; 17a, 17b) for support rods (18, 19, 20, 21) of the spreader bar (9) are provided, which support rods are attachable via the pivot bearing supports (16a, 16b,17a, 17b) to the corresponding lower and upper bars (2a, 2b; 4a, 4b) in the mounted position of the frame (1).

7. Stroller according to one of the claims 1 to 5, **characterized in that** as well at the upper bars as at the lower bars (2a, 2b; 4a, 4b) pivot bearing supports (16a, 16b; 17a, 17b) for support rods (18, 19, 20, 21) of the spreader bar (9) are provided, on which pivot bearing supports the support rods are pivotally attached, and that at least one pair of pivot bearing supports (18, 19; 20, 21) is placed slidable in length at the lower or at the upper bars (2a, 2b; 4a, 4b) and fixable in the mounted position of the spreader bar (9), and by moving the pivot bearing supports the frame is folded and or brought into the assembled position.

8. Stroller according to claim 6 or 7, **characterized in that** pivot bearing supports (16a, 16b; 17a, 17b) are at least about a definite angle radially pivotally or orientably arranged at or on the bars.

9. Stroller according to claim 8, **characterized in that** the pivot bearing supports (16a, 16b; 17a, 17b) are provided in such number and position that outer surrounding connecting arms substantially form a square or rectangle in the mounted position of the frame.

10. Stroller according to one of the claims 6 to 9, **characterized in that** in addition to or instead of outer connecting arms support rods (18, 19; 20, 21) are provided and arranged in a crosswise or X-shaped form, which support rods connect the right lower bar (4) to the left upper bar (2a) and the left lower bar (4a) to the right upper bar (2b) in the assembled position of the frame (1).

11. Stroller according to claim 10, **characterized in that** the support rods (18, 19,2 0, 21) provided and arranged in a crosswise or U-shaped form are located in a centric bearing support (22) with swiveling bearings (23), which are transversely placed in guides (24), in which the ends of the support rods (18, 19, 20, 21) are laterally guided and which limit the path of swiveling of the support rods (18, 19, 20, 21) and are releasably fastened therein by fastening means in the mounted position, which bearing support (22) is such placed that by moving away from the back r pushing to the front in case of inverse construction of the guides (24) the crossbar collapses and the bars (2a, 2b; 4a, 4b) simultaneously move towards each other.

12. Stroller according to claim 11, **characterized in that** the bearing support (22) is a plastic part comprising guides (24), which in the inclination angle of the bearing compartments (12) in the connecting element (3) and the opening of said connecting element run towards the side of the connecting element (3).

13. Stroller according to claim 11, **characterized in that** the locking devices in the guide (24) consist of protruding knubs elastically engaging over the support rods in the assembled position.

14. Stroller according to one of the claims 11 to 13, **characterized in that** the support (22) is made of plastics and comprises openings for providing additional equipment for the child's or doll's stroller, such as suspension appliance, for example, for a shopping basket, and/or a handle for operation when mounting or folding the frame (1).

15. Stroller according to claim 1 or 6, **characterized in that** at the ends of the upper bars (2a, 2b) projecting over the pivot bearing fasteners (26a, 26b) for collapsible slide rods 27a, 27b) with sliding handles (28a, 28b) are located, the length of said rods being such selected that they end in the area of the connecting element (3) in the collapsed position or projecting over said connecting element in the front, and that at the ends of the bars projecting over the pivot bearing fastener (26a, 26b) or at the slide rods engaging fastening means are provided, which means assure a detachable connection of the slide rods with the upper bars in assembled position of the frame.

16. Stroller according to claim 15, **characterized in that** the engaging fastening means are made of plastics with elastic lips and that the main bodies of said fastening means are rotatable by exerting a lateral force and laterally engage via the ends of the bars or the extensions of the connecting rods and comprise an opening in the bearing for locating the corresponding part and are fastened to the other part safe from rotating.

17. Stroller according to one of the preceding claims, **characterized in that** all bars, connecting arms and support rods consist of tubing, preferably round metal tubing.

18. Stroller according to claim 1 or one or more of the preceding claims, **characterized in that** at the upper bars (2a, 2) supports for locating an insert of a seat or a baby carriage are provided, said extending at least partly between the upper bars (2a, 2b) and/or the connecting arms (20, 21).

19. Stroller according to claim 18, **characterized in that** the seating insert is a safety seat for children including corresponding connecting means to be fastened to the supports.

## Revendications

1. Poussette pliante pour enfants et/ou pour poupées, comprenant un châssis de poussette (1) qui comporte au moins :
-- deux longerons de châssis supérieurs (2a, 2b) agencés de façon symétrique, montant de l'avant vers l'arrière et s'étendant sensiblement en forme de V, lesdits longerons étant formés de façon continue ou par tronçons reliés les uns aux autres, dont les extrémités inférieures sont couplées de façon pivotante sur une pièce de liaison (3) pour les amener d'une position repliée vers une position déployée,
-- sur ladite pièce de liaison (3) sont agencés deux longerons de châssis inférieurs pivotants (4a, 4b) agencés de façon symétrique, s'étendant de l'avant vers l'arrière sensiblement en forme de V, lesdits longerons étant formés de façon continue ou par tronçons reliés les uns aux autres, et à leurs extrémités postérieures sont fixés des supports de paliers de roues (5) pour des roues ou des agencements de roues arrière (6),
-- au moins un agencement de roue avant (7) avec au moins une roue, ledit agencement étant fixé sur la pièce de liaison (3) ou sur une partie en pont des longerons de châssis inférieurs (4a, 4b) à l'aide d'au moins un support de palier de roue (8),
**caractérisée par** :
-- une tringlerie d'ouverture (9) déployable sous forme d'une tringlerie à croisillon, qui est prévue à une certaine distance de la pièce de liaison (3) sur les longerons (2a, 2b ; 4a, 4b) en reliant ces derniers, et qui est réalisée de sorte qu'après déploiement du châssis de poussette, les longerons supérieurs et les longerons inférieurs (2a, 2b) sont amenés dans la position caractéristique en V aussi bien l'un par rapport à l'autre que les uns par rapport aux autres et, lors du repliage de la tringlerie d'ouverture (9) les longerons supérieurs et inférieurs (4a, 4b) sont pivotés simultanément les uns vers les autres.

2. Poussette selon la revendication 1, **caractérisée en ce qu'**au moins les axes de pivotement (10a, 10b) des longerons supérieurs (2a, 2b) sont agencés sur la pièce de liaison (3) sous un angle d'inclinaison tridimensionnel par rapport à l'axe longitudinal du châssis de poussette (1) tel que, dans l'état replié, au moins les longerons supérieurs (2a, 2b) s'étendent approximativement parallèlement l'un par rapport à l'autre et par rapport aux longerons inférieurs (4a, 4b) et à faible distance.

3. Poussette selon l'une ou l'autre des revendications 1 et 2, **caractérisée en ce que** les axes de pivotement (11a) des longerons inférieurs (4a, 4b) sont agencés l'un par rapport à l'autre et par rapport aux longerons supérieurs (2a, 2b) sur la pièce de liaison (3) sous un angle d'inclinaison tridimensionnel par rapport à l'axe longitudinal du châssis de poussette (1) tel que dans l'état replié les longerons inférieurs (4a, 4b) s'étendent approximativement parallèles et à faible distance.

4. Poussette selon l'une des revendications précédentes, **caractérisée en ce que** la pièce de liaison (3) comporte des cavités de montage (12) en forme de V pour le montage des extrémités des longerons (2a, 2b ; 4a, 4b) et pour limiter le trajet de pivotement ainsi que pour la stabilisation latérale, lesdites cavités étant agencées l'une par rapport à l'autre sous la forme d'un X, et **en ce que** la pièce de liaison (3) présente une certaine profondeur qui correspond essentiellement à la profondeur des cavités de montage (12) en forme de V, et **en ce que** sur la pièce de liaison (3) sont prévus des dispositifs (13) pour la fixation du support de paliers de roues (8).

5. Poussette selon la revendication 4, **caractérisée en ce que** la pièce de liaison (3) est réalisée en matière plastique et les cavités de montage latérales (12) sont séparées l'une de l'autre par un bloc d'écartement médian (14), dont la largeur et la hauteur déterminent les distances des longerons (2a, 2b ; 4a, 4b) les uns par rapport aux autres à l'état replié, et **en ce qu'**une ouverture de montage centrale (15) est prévue sur le bloc d'écartement médian (14), au moins sur le côté antérieur, ouverture dans laquelle peut être placé un tenon de montage du dispositif (13) pour un support de palier de roue (8) qui fait saillie vers le bas.

6. Poussette selon l'une des revendications précédentes, **caractérisée en ce que**, au moins sur les longerons inférieurs (4a, 4b) ou sur les longerons supérieurs (2a, 2b) et à distance de la pièce de liaison antérieure (3), sont prévus des supports de paliers pivotants (16a, 16b ; 17a, 17b) pour des entretoises de soutien (18, 19, 20, 21) de la tringlerie d'ouverture (9), lesquelles peuvent être fixées, dans l'état déployé du châssis de poussette (1), sur les longerons correspondants inférieurs ou supérieurs (2a, 2b ; 4a, 4b) par l'intermédiaire des supports de paliers pivotants (16a, 16b ; 17a, 17b).

7. Poussette selon l'une des revendications 1 à 5, **caractérisée en ce que** des supports de paliers pivotants (16a, 16b ; 17a, 17b) pour des entretoises de soutien (18, 19, 20, 21) de la tringlerie d'ouverture (9) sont prévus sur les longerons supérieurs tout comme sur les longerons inférieurs (2a, 2b ; 4a, 4b), les entretoises de soutien (18, 19, 20, 21) étant montées mobiles en pivotement sur lesdits supports de paliers pivotants, et **en ce qu'**au moins une paire de supports de paliers pivotants (18, 19 ; 20, 21) est agencée avec possibilité de translation longitudinale sur les longerons inférieurs ou sur les longerons supérieurs (2a, 2b ; 4a, 4b) et susceptible d'être arrêtée dans la position déployée de la tringlerie d'ouverture (9), et par translation du support de palier pivotant le châssis peut être replié ou amené dans la position d'utilisation déployée.

8. Poussette selon l'une ou l'autre des revendications 6 et 7, **caractérisée en ce que** les supports de paliers pivotants (16a, 16b ; 17a, 17b) sont agencés sur ou contre les longerons avec possibilité de rotation ou de pivotement radial au moins sur une plage angulaire déterminée.

9. Poussette selon la revendication 8, **caractérisée en ce que** les supports de paliers pivotants (16a, 16b ; 17a, 17b) sont montés en un nombre tel et avec un positionnement tel que des entretoises de liaison périphériques extérieures forment, dans l'état déployé du châssis de poussette ( 1 ) sensiblement un carré ou un rectangle.

10. Poussette selon l'une des revendications 6 à 9, **caractérisée en ce que**, en plus des entretoises de liaison extérieures, ou à la place de celles-ci, il est prévu des entretoises de soutien (18, 19 ; 20, 21) agencées en se croisant ou sous forme de X, qui relient le longeron inférieur droit (4b) au longeron supérieur gauche (2a) et qui relient le longeron inférieur gauche (4a) au longeron supérieur droit (2b) dans l'état déployé du châssis de poussette (1).

11. Poussette selon la revendication 10, **caractérisée en ce que** les entretoises de soutien (18, 19 ; 20, 21) agencées en se croisant ou sous forme de X sont agencées sur un support de palier central (22) avec des paliers pivotants (23) qui sont prévus de manière à s'étendre transversalement dans des logements de guidage (24), dans lesquels les extrémités des entretoises de soutien (18, 19, 20, 21) sont guidées latéralement et qui limitent le trajet de pivotement des entretoises de soutien (18, 19, 20, 21) et y sont fixés par des organes de blocage, de manière amovible, dans l'état déployé, et **en ce que** le support de palier (22) est ainsi agencé qu'en le tirant par l'arrière ou en le poussant en direction de l'avant lors d'une réalisation inverse des logements de guidage (24), la tringlerie d'ouverture en croix est repliée, et les longerons (2a, 2b ; 4a, 4b) se déplacent simultanément les uns vers les autres.

12. Poussette selon la revendication 11, **caractérisée en ce que** le support de palier (22) est une pièce en matière plastique dans laquelle sont prévues des cavités de guidage (24) qui s'étendent sous l'angle d'ouverture des cavités de paliers (12) dans la pièce de liaison (3) et dont l'ouverture est tournée vers le côté de la pièce de liaison (3).

13. Poussette selon la revendication 11, **caractérisée en ce que** les organes de blocage dans le logement de guidage (24) sont constitués par des tétons en saillie qui coiffent de manière élastique les entretoises de soutien dans la position déployée.

14. Poussette selon l'une des revendications 11 à 13, **caractérisée en ce que** le support de palier (22) est en matière plastique et comporte des ouvertures pour engager des dispositifs additionnels pour la poussette pour enfants ou pour poupée, comme des dispositifs d'accrochage, par exemple pour un panier à provisions, et/ou une poignée (25) pour l'actionnement lors du déploiement ou du repliage du châssis (1).

15. Poussette selon l'une ou l'autre des revendications 1 et 6,
**caractérisée en ce que**, aux extrémités des longerons supérieurs (2a, 2b) qui dépassent des paliers pivotants supérieurs (17a, 17b), sont prévus des supports de paliers pivotants (26a, 26b) pour des tiges-poussoirs rabattables (27a, 27b) avec un poignée de poussoir (28a, 28b), dont la longueur est ainsi choisie que, dans l'état rabattu, elle se termine dans la zone de la pièce de liaison (3) ou dépasse de celle-ci du côté antérieur, et **en ce que**, aux extrémités des longerons qui dépassent des supports de paliers pivotants (26a, 26b) ou sur les tiges-poussoirs, sont prévus des moyens de fixation par enclenchement qui assurent une liaison détachable des tiges-poussoirs avec les longerons supérieurs (2a, 2b) dans l'état déployé du châssis de poussette.

16. Poussette selon la revendication 15, **caractérisée en ce que** les moyens de fixation par enclenchement sont réalisés en matière plastique avec des lèvres élastiques, et **en ce que** le corps de base des moyens de fixation par enclenchement est capable de pivoter en exerçant une force latérale et s'engage par enclenchement latéralement par-dessus l'extrémité des longerons ou le prolongement de la tige-poussoir, et présente une ouverture de montage pour la réception de l'élément correspondant, et est fixé à l'autre élément sans possibilité de rotation.

17. Poussette selon l'une des revendications précédentes, **caractérisée en ce que** tous les longerons, entretoises de liaison et entretoises de soutien sont réalisé(e)s en tube métallique, de préférence en tube métallique rond.

18. Poussette selon la revendication 1 ou selon l'une ou plusieurs des revendications précédentes, **caractérisée en ce que** des supports sont prévus sur les longerons supérieurs (2a, 2b) pour la réception d'un insert formant siège de poussette ou formant lit de poussette, qui s'étend au moins partiellement entre les longerons de châssis supérieurs (2a, 2b) et/ou entre les entretoises de liaison (20, 21).

19. Poussette selon la revendication 18, **caractérisée en ce que** l'insert formant siège de poussette est un siège de sécurité pour automobiles, qui comporte des moyens de liaison antagonistes pour la fixation sur les supports.
